# FASCICULE DE BREVET EUROPEEN

(11) **EP 3 212 488 B1**
(45) Date de publication et mention de la délivrance du brevet: **03.04.2019**
(21) Numéro de dépôt: 15778361.4
(22) Date de dépôt: 08.09.2015
(51) Int. Cl.: B62D 25/04, B62D 25/02

(54) **LONGERON DE BAS DE CAISSE DE VÉHICULE AUTOMOBILE AVEC PIÈCE MODULAIRE**
SCHWELLE EINER KRAFTFAHRZEUGROHKAROSSERIE MIT MODULAREM BAUTEIL
SILL OF A MOTOR VEHICLE SHELL WITH MODULAR COMPONENT

(30) Priorité: 30.10.2014 FR 1460475
(43) Date de publication de la demande: 06.09.2017
(73) Titulaire: PSA Automobiles SA, 78300 Poissy (FR)
(72) Inventeur: CASTELLI, Bruno, F-92300 Levallois Perret (FR); BRUNET, Fabrice, F-75015 Paris (FR)
(86) Numéro de dépôt international: PCT/FR2015/052387
(87) Numéro de publication internationale: WO 2016/066911

(56) Documents cités:
- FR-A1- 2 905 111
- JP-A- H04 215 570
- JP-A- H10 226 363

## Description

L'invention a trait au domaine de la construction de véhicule automobile. Plus particulièrement, l'invention a trait au domaine de la réalisation d'un bas de caisse.

La mise en place de roues d'un véhicule automobile dans les parties avant et arrière d'un véhicule relève de l'architecture de la caisse du véhicule, celle-ci devant être configurée pour qu'un espace minimum soit réalisé entre les roues et la caisse de véhicule. Le volume de passage de roue doit intégrer le débattement de la roue lié à la suspension du véhicule, il doit aussi généralement intégrer l'accroissement de la taille d'une roue par exemple équipée de chaines pour la conduite sur sol enneigé. Par ailleurs la tendance actuelle dans le secteur automobile comprend un accroissement de la taille des roues des véhicules. L'accroissement des tailles de roue a des conséquences sur l'ensemble des modèles de véhicules en particulier sur l'architecture de la caisse formant le passage de roue.

Le document de brevet FR 2 905 111 A1 divulgue un longeron de bas de caisse de véhicule automobile. Le longeron s'étend longitudinalement et comprend une garniture de petite dimension rapportée sur un profilé principal longiligne. Cette garniture forme une embase d'appui pour un montant d'encadrement d'une porte latérale du véhicule. Le profilé longiligne définit un bord arrière libre ainsi que des bords inférieur et supérieur rectilignes ; la garniture comprend une première portion s'étendant horizontalement en superposition avec le profilé longiligne et une deuxième portion en dehors du profilé longiligne s'étendant verticalement. Le bord supérieur de la deuxième portion du longeron présente une feuillure qui coïncide avec celle d'un montant arrière du véhicule sur lequel le longeron de bas de caisse peut être fixé. Le longeron de bas de caisse est d'une réalisation modulaire, la garniture étant réalisée pour un modèle particulier de véhicule automobile alors que le profilé longiligne de section en U s'étendant longitudinalement en direction de la roue est une pièce standard commune à différents modèles. Cet enseignement est intéressant en ce que la construction du véhicule avec le longeron de bas de caisse modulaire est plus économique. L'enseignement se limite cependant à la réalisation modulaire du longeron de bas de caisse pour pouvoir faire varier les silhouettes des différents modèles de véhicules par l'adaptation de la forme de la garniture rapportée au montant arrière du véhicule. Par ailleurs, le profilé ayant une fonction unique de rigidification du longeron, il serait hasardeux de la part de l'homme de l'art de penser réduire son étendue vers la roue en vue de modifier un passage de roue sans que cela n'impacte la structure de la caisse.

Le document JP H10 226363 A décrit un longeron intérieur de bas de caisse selon le préambule de la revendication 1.

L'invention a pour objectif de proposer une solution palliant au moins un inconvénient de l'état de la technique susmentionné. Plus particulièrement, l'invention a pour objectif de proposer un longeron de bas de caisse facilitant la réalisation de différents modèles de véhicules équipés de roues de plus grande taille.

L'invention a pour objet un longeron intérieur de bas de caisse de véhicule automobile, formant un corps creux de section en U et avec : une première portion destinée à s'étendre horizontalement ; et une deuxième portion formant un coude avec la première portion et étant destinée à s'étendre vers le haut, ladite portion comprenant une face frontale opposée à la première portion et destinée à délimiter un passage de roue du véhicule, ladite face comprenant une feuillure de jonction à un autre corps creux ; remarquable en ce que la feuillure de jonction est formée par une pièce de section coudée, ladite pièce étant rapportée sur la face frontale de la deuxième portion.

Selon un mode avantageux de l'invention, la pièce rapportée comprend un premier bord formant la feuillure de jonction, un deuxième bord latéral superposé à la face frontale du longeron, et une portion coudée reliant les premier et deuxième bords, ladite portion formant un ressaut par rapport au deuxième bord, dirigé à l'opposé du premier bord.

La pièce rapportée du longeron intérieur de bas de caisse est une pièce modulaire reconnaissable par la longueur, mesurée dans le plan de section de la pièce, entre la portion de la pièce formant le ressaut et le bout du bord de la pièce formant la feuillure.

Selon un mode avantageux de l'invention, le ressaut de la portion coudée présente un profil en forme de S.

Selon un mode avantageux de l'invention, le profil en S du ressaut de la portion coudée présente une double courbure de rayon compris entre 2mm et 8mm.

Selon un mode avantageux de l'invention, le deuxième bord latéral superposé à la face frontale du longeron comprend au moins une nervure coopérant avec au moins une nervure de la face frontale, de manière à positionner verticalement la pièce rapportée par rapport à ladite face frontale.

Selon un mode avantageux de l'invention, la pièce rapportée est réalisée par emboutissage.

Selon un mode avantageux de l'invention, la pièce rapportée s'étend sur plus de 40% de la longueur de la deuxième portion dans la direction destinée à s'étendre vers le haut, préférentiellement plus de 60%, plus préférentiellement encore plus de 80%.

Selon un mode avantageux de l'invention, le longeron intérieur de bas de caisse est un pied avant de bas de caisse configuré pour supporter la charge d'une porte.

L'invention a également pour objet un véhicule automobile comprenant deux longerons de bas de caisse s'étendant longitudinalement entre une partie avant et une partie arrière du véhicule, chacune desdites parties délimitant des passages de roue, remarquable en ce que chacun des longerons de bas de caisse comprend un longeron intérieur de bas de caisse conforme à l'invention.

Selon un mode avantageux de l'invention, la partie avant dudit véhicule comprend un tablier inférieur fixé aux faces frontales des longerons intérieurs de bas de caisse.

Selon un mode avantageux de l'invention, le tablier inférieur est fixé en avant de chaque face frontale, les pièces rapportées étant fixées sur une face arrière desdites faces frontales, préférentiellement par soudure par résistance électrique.

Selon un mode avantageux de l'invention, le longeron de bas de caisse comprend un profilé intérieur en U longiligne assemblé au longeron intérieur de bas de caisse.

Selon un mode avantageux de l'invention, le véhicule comprend, en outre, deux longerons extérieurs de bas de caisse formant un corps creux de section en U avec des feuillures de jonction en contact avec les feuillures de jonction des longerons intérieurs, respectivement.

Les mesures de l'invention sont intéressantes en ce qu'elles facilitent la construction de différents modèles de véhicule automobiles recevant des roues de plus grande dimension. En effet, les éléments principaux de la caisse du véhicule formant l'architecture générale du véhicule restent inchangés. Le longeron intérieur de bas de caisse comprend un nouvel élément standard sur lequel est rapportée la pièce modulaire adaptée selon la taille de la roue. Cette pièce rapportée modifie l'étendue de la feuillure formant le passage de roue sans impacter ni la structure de la caisse ni son architecture.

D'autres caractéristiques et avantages de la présente invention seront mieux compris à l'aide de la description et des dessins parmi lesquels :
- La figure 1 est une vue d'un véhicule automobile comprenant des longerons de bas de caisse conforme à l'invention ;
- La figure 2 est une vue du longeron de bas de caisse du véhicule de la figure 1 ;
- La figure 3 est une vue en coupe horizontale du longeron de bas de caisse de la figure 2 au niveau du longeron intérieur de bas de caisse ;
- La figure 4 est une vue en perspective du longeron intérieur de bas de caisse de la figure 3 dans une représentation éclatée ;

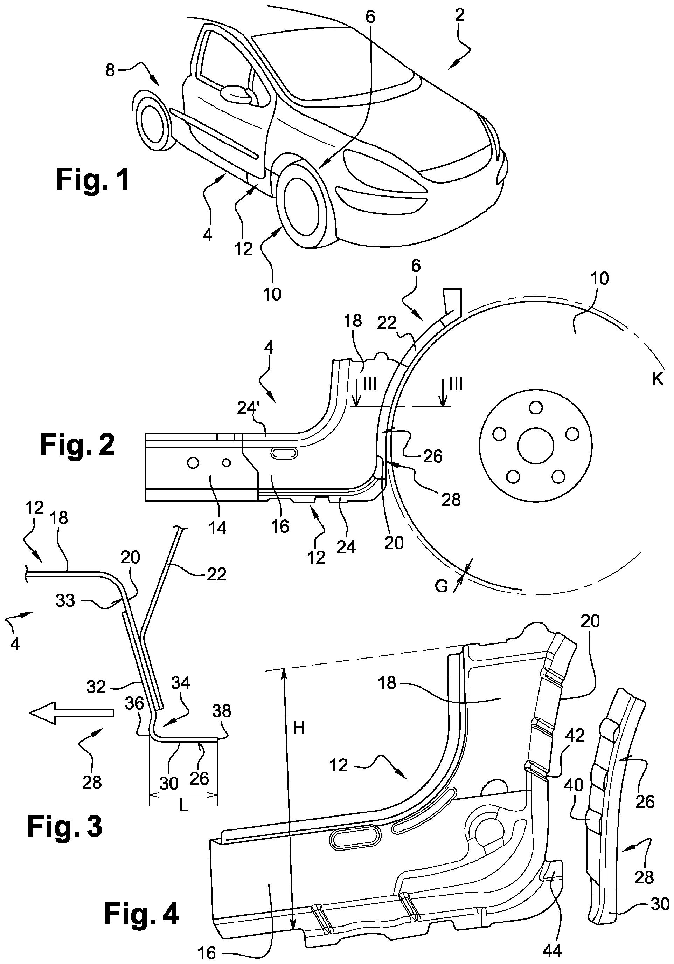

La figure 1 est une vue d'un véhicule automobile 2 comprenant des longerons de bas de caisse 4 conforme à l'invention. Les longerons 4, dont un est visible sur l'image, s'étendent longitudinalement entre une partie avant 6 et une partie arrière 8 du véhicule chacune d'elles délimitant des passages de roue 10. Chacun de ces longerons de bas de caisse 4 comprend un longeron intérieur de bas de caisse 12 conforme à l'invention. Le longeron intérieur de bas de caisse 12 est couramment appelé « pied avant », cette partie du longeron 4 étant configurée pour recevoir la charge d'une porte du véhicule.

La figure 2 est une vue de côté d'un longeron droit 4 de bas de caisse comprenant un longeron intérieur de bas de caisse 12, ou « pied avant » intérieur 12 de bas de caisse, conforme à l'invention. Le longeron de bas de caisse 4 du véhicule comprend un profilé intérieur en U longiligne 14 (à gauche sur l'image), assemblé au pied avant intérieur 12 qui lui-même est assemblé à la partie avant du véhicule 6 (à droite sur l'image). Le pied avant 12 comprend un corps creux de section en U avec une première portion 16 s'étendant horizontalement et une deuxième portion 18 formant un coude avec la première portion et s'étendant vers le haut. La portion 18 s'étendant vers le haut comprend une face frontale 20 qui délimite un passage de roue du véhicule. Le passage de roue « K » est représenté par un trait interrompu entourant la roue avant droite du véhicule. On peut observer un espace « G »entre le contour de passage de roue « K » et la roue au niveau de la feuillure 26 de la face frontale 20 du pied avant 12. Un tel espace « G » minimal de quelques millimètres est par exemple nécessaire à la mise en place d'un pare-boue. La face frontale 20 est assemblée à un tablier inférieur 22 de la partie avant 6 du véhicule ; la portion horizontale 16 du pied avant intérieur 12 est, à l'opposé de la face frontale 20, assemblée au profilé longiligne de section en U 14 et ce par superposition. On peut observer que le pied avant intérieur 12 comprend des feuillures de jonction 24 et 24' destinées à recevoir un longeron extérieur de bas de caisse (non représenté) formant également une section en U. La deuxième portion 18 du pied avant intérieur 12 s'étendant vers le haut comprend une pièce de section coudée 28 formant la feuillure 26 de la face frontale 20 du pied avant intérieur 12. Cette pièce 28 est rapportée sur la face frontale 20 de cette deuxième portion 18.

La figure 3 est une vue en coupe III-III horizontale du longeron de bas de caisse 4 au niveau de la deuxième portion 18 s'étendant vers le haut du longeron intérieur de bas de caisse 12, ou « pied avant » intérieur 12, plus particulièrement au niveau de son assemblage sur le tablier inférieur 22. On peut voir sur l'image le pied avant intérieur 12 avec sa face frontale 20 au centre de l'image. La pièce rapportée 28 du pied avant intérieur 12 comprend un premier bord 30 formant la feuillure de jonction 26, un deuxième bord latéral 32 superposé à la face frontale 20 du pied avant 12, et enfin une portion coudée 34 reliant les premier 30 et deuxième 32 bords. En particulier, cette portion coudée 34 forme un ressaut 36 par rapport au deuxième bord latéral 32, ressaut qui est dirigé vers l'arrière du véhicule à l'opposé du premier bord 30. On peut voir une flèche indiquant la direction vers l'arrière du véhicule. Cette mesure est intéressante en ce que le ressaut 36 vers l'arrière du véhicule permet un recul vers l'arrière du bout 38 du premier bord 30 de la pièce rapportée 12 et ainsi une modification du contour de passage de roue. On peut observer que le ressaut 36 présente un profil en forme de S avec une double courbure ; chacune des courbures pouvant être d'un rayon compris entre 2mm et 8mm. La pièce rapportée 28 du pied avant intérieur 12 est une pièce modulaire reconnaissable par la longueur « L », mesurée dans le plan de section de la pièce, entre la partie de la pièce formant le ressaut 36 et le bout 38 du bord 30 de la pièce formant la feuillure 26. On peut observer que la pièce rapportée 28 est fixée par son bord latéral 32 sur la face arrière 33 de la face frontale 20 du pied avant intérieur 12. De l'autre côté de cette face avant 20 est fixé le tablier inférieur 22. Les fixations peuvent être réalisées par des points de soudure par résistance électrique.

La figure 4 est une vue en perspective dans une représentation éclatée du longeron intérieur de bas de caisse 12 ou « pied avant » intérieur 12 conforme à l'invention. On retrouve les portions horizontale 16 et verticale 18 du pied avant intérieur 12. On peut voir à droite de l'image la pièce 28 formant la feuillure 26 de la face frontale 20 de la deuxième portion 18 du pied avant intérieur. Le deuxième bord latéral 32 de la pièce 28 est destiné à être superposé à la face frontale 20 du pied avant intérieur et comprend plusieurs nervures 40 apte à coopérer avec des nervures 42 correspondantes de la face frontale 20. Le pied avant 12 comprend également un rebord 44 destiné à être assemblé au premier bord 30 de la pièce 12 une fois rapportée. Cette mesure est intéressante pour le positionnement latéral de la pièce 28 dans son assemblage à la face frontale 20 du pied avant intérieur 12. La pièce 28 formant la feuillure 26 de la face frontale 20 peut s'étendre sur plus de 40% de la hauteur « H » de la deuxième portion 18 du pied 12 dans la direction verticale. Elle s'étend en l'occurrence sur plus de 80% de cette hauteur « H » et jusqu'à l'extrémité supérieure de cette deuxième portion verticale 18. Cette mesure est favorable à l'étendue de la modification du contour de passage de roue. La pièce rapportée 28 est réalisée par emboutissage.

## Revendications

1. Longeron intérieur de bas de caisse (12) de véhicule automobile (2), formant un corps creux de section en U et avec :
- une première portion (16) destinée à s'étendre horizontalement ; et
- une deuxième portion (18) formant un coude avec la première portion (16) et étant destinée à s'étendre vers le haut, ladite portion (18) comprenant une face frontale (20) opposée à la première portion (16) et destinée à délimiter un passage de roue (K) du véhicule, **caractérisé en ce que** ladite face (20) comprend une feuillure de jonction (26) à un autre corps creux ;
la feuillure de jonction (26) étant formée par une pièce de section coudée (28), ladite pièce étant rapportée sur la face frontale (20) de la deuxième portion (18).

2. Longeron intérieur (12) selon la revendication 1, **caractérisé en ce que** la pièce rapportée (28) comprend un premier bord (30) formant la feuillure de jonction (26), un deuxième bord latéral (32) superposé à la face frontale (20) du longeron (12), et une portion coudée (34) reliant les premier (30) et deuxième (32) bords, ladite portion (34) formant un ressaut (36) par rapport au deuxième bord (32), dirigé à l'opposé du premier bord (30).

3. Longeron intérieur (12) selon la revendication 2, **caractérisé en ce que** le ressaut (36) de la portion coudée (34) présente un profil en forme de S.

4. Longeron intérieur (12) selon la revendication 3, **caractérisé en ce que** le profil en S du ressaut (36) de la portion coudée (34) présente une double courbure de rayon compris entre 2mm et 8mm.

5. Longeron intérieur (12) selon l'une des revendications 2 à 4, **caractérisé en ce que** le deuxième bord latéral (32) superposé à la face frontale (20) du longeron (12) comprend au moins une nervure (40) coopérant avec au moins une nervure (42) de la face frontale (20), de manière à positionner verticalement la pièce rapportée (28) par rapport à ladite face frontale (20).

6. Longeron intérieur (12) selon l'une des revendications 1 à 5, **caractérisée en ce que** la pièce rapportée (28) est réalisée par emboutissage.

7. Véhicule automobile (2) comprenant deux longerons de bas de caisse (4) s'étendant longitudinalement entre une partie avant (6) et une partie arrière (8) du véhicule, chacune desdites parties (6 ; 8) délimitant des passages de roue (K),
**caractérisé en ce que** chacun des longerons de bas de caisse (4) comprend un longeron intérieur de bas de caisse (12) selon l'une des revendications 1 à 6.

8. Véhicule automobile (2) selon la revendication 7, **caractérisé en ce que** la partie avant (6) dudit véhicule (2) comprend un tablier inférieur (22) fixé aux faces frontales (20) des longerons intérieurs de bas de caisse (12).

9. Véhicule automobile (2) selon la revendication 8, **caractérisé en ce que** le tablier inférieur (22) est fixé en avant de chaque face frontale (20), les pièces rapportées (28) étant fixées sur une face arrière desdites faces frontales, préférentiellement par soudure par résistance électrique.

10. Véhicule automobile (2) selon l'une des revendications 7 à 9, **caractérisé en ce qu'**il comprend, en outre, deux longerons extérieurs de bas de caisse formant un corps creux de section en U avec des feuillures de jonction en contact avec les feuillures de jonction (24 ; 24') des longerons intérieurs (12), respectivement.

## Patentansprüche

1. Innere Rohkarosserieschwelle (12) eines Kraftfahrzeugs (2), die einen Hohlkörper mit U-Querschnitt bildet und mit:
- einem ersten Abschnitt (16), der dazu bestimmt ist, sich horizontal zu erstrecken; und
- einem zweiten Abschnitt (18), der ein Winkelteil mit dem ersten Abschnitt (16) bildet und dazu bestimmt ist, sich nach oben zu erstrecken, wobei der Abschnitt (18) eine Vorderfläche (20) umfasst, die dem ersten Abschnitt (16) entgegengesetzt und dazu bestimmt ist, einen Radlauf (K) des Fahrzeugs abzugrenzen,
**dadurch gekennzeichnet, dass** die Fläche (20) einen Falz (26) zum Anschließen an einem anderen Hohlkörper umfasst;
wobei der Anschlussfalz (26) aus einem Teil mit abgewinkeltem Querschnitt (28) gebildet ist, wobei das Teil auf der Vorderfläche (20) des zweiten Abschnitts (18) angefügt ist.

2. Innere Schwelle (12) nach Anspruch 1, **dadurch gekennzeichnet, dass** das angebaute Teil (28) einen ersten Rand (30) umfasst, der den Anschlussfalz (26) bildet, einen zweiten seitlichen Rand (32), der der Vorderfläche (20) der Schwelle (12) überlagert ist, und einen abgewinkelten Abschnitt (34), der den ersten (30) und zweiten Rand (32) verbindet, wobei der Abschnitt (34) eine Auskragung (36) bezüglich des zweiten Rands (32) bildet, der zu der entgegengesetzten Seite des ersten Rands (30) gerichtet ist.

3. Innere Schwelle (12) nach Anspruch 2, **dadurch gekennzeichnet, dass** die Auskragung (36) des abgewinkelten Abschnitts (34) ein Profil in Form eines S aufweist.

4. Innere Schwelle (12) nach Anspruch 3, **dadurch gekennzeichnet, dass** das Profil in S der Auskragung (36) des abgewinkelten Abschnitts (34) einen doppelten Krümmungsradius, der zwischen 2 mm und 8 mm liegt, aufweist.

5. Innere Schwelle (12) nach einem der Ansprüche 2 bis 4, **dadurch gekennzeichnet, dass** der zweite seitliche Rand (32), der der Vorderfläche (20) der Schwelle (12) überlagert ist, mindestens eine Rippe (40) umfasst, die mit mindestens einer Rippe (42) der Vorderfläche (20) derart zusammenwirkt, dass das angefügte Teil (28) bezüglich der Vorderfläche (20) vertikal positioniert ist.

6. Innere Schwelle (12) nach einem der Ansprüche 1 bis 5, **dadurch gekennzeichnet, dass** das angebaute Teil (28) durch Stanzen hergestellt wird.

7. Kraftfahrzeug (2), das zwei Rohkarosserieschwellen (4) umfasst, die sich längs zwischen einem Vorderteil (6) und einem Hinterteil (8) des Fahrzeugs erstrecken, wobei jeder der Teile (6; 8) Radläufe (K) abgrenzt,
**dadurch gekennzeichnet, dass** jede der Rohkarosserieschwellen (4) eine innere Rohkarosserieschwelle (12) nach einem der Ansprüche 1 bis 6 umfasst.

8. Kraftfahrzeug (2) nach Anspruch 7, **dadurch gekennzeichnet, dass** der Vorderteil (6) des Fahrzeugs (2) eine untere Spritzwand (22) umfasst, die an den Vorderflächen (20) der inneren Rohkarosserieschwellen (12) befestigt ist.

9. Kraftfahrzeug (2) nach Anspruch 8, **dadurch gekennzeichnet, dass** die untere Spritzwand (22) vor jeder Vorderfläche (20) befestigt ist, wobei die angefügten Teile (28) auf einer Rückseitenfläche der Vorderflächen bevorzugt durch elektrisches Widerstandsschweißens befestigt sind.

10. Kraftfahrzeug (2) nach einem der Ansprüche 7 bis 9, **dadurch gekennzeichnet, dass** es außerdem zwei äußere Rohkarosserieschwellen umfasst, die einen Hohlkörper mit U-Querschnitt mit Anschlussfalzen in Berührung jeweils mit den Anschlussfalzen (24; 24') der inneren Schwellen (12) bilden.

## Claims

1. An internal sill (12) of a shell of a motor vehicle (2), forming a hollow body of U-shaped cross-section and with:
- a first portion (16) intended to extend horizontally; and
- a second portion (18) forming an elbow with the first portion (16) and being intended to extend upwards, said portion (18) including a front face (20) opposite the first portion (16) and intended to delimit a wheel arch (K) of the vehicle,
**characterized in that** said face (20) includes a junction rebate (26) to another hollow body;
the junction rebate (26) being formed by an elbow section component (28), said component being connected on the front face (20) of the second portion (18).

2. The internal sill (12) according to Claim 1,
**characterized in that** the connected component (28) includes a first edge (30) forming the junction rebate (26), a second lateral edge (32) superposed to the front face (20) of the sill (12), and a bent portion (34) connecting the first (30) and second (32) edges, said portion (34) forming a protrusion (36) with respect to the second edge (32), directed opposite the first edge (30).

3. The internal sill (12) according to Claim 2,
**characterized in that** the protrusion (36) of the bent portion (34) has an S-shaped profile.

4. The internal sill (12) according to Claim 3,
**characterized in that** the S-shaped profile of the protrusion (36) of the bent portion (34) has a double radius of curvature comprised between 2 mm and 8 mm.

5. The internal sill (12) according to one of Claims 2 to 4, **characterized in that** the second lateral edge (32) superposed to the front face (20) of the sill (12) includes at least one rib (40) cooperating with at least one rib (42) of the front face (20), so as to vertically position the connected component (28) with respect to said front face (20).

6. The internal sill (12) according to one of Claims 1 to 5, **characterized in that** the connected component (28) is formed by stamping.

7. A motor vehicle (2) including two sills of a shell (4), extending longitudinally between a front portion (6) and a rear portion (8) of the vehicle, each of said portions (6; 8) delimiting wheel arches (K),
**characterized in that** each of the sills of the shell (4) includes an internal sill of the shell (12) according to one of Claims 1 to 6.

8. The motor vehicle (2) according to Claim 7,
**characterized in that** the front portion (6) of said vehicle (2) includes a lower panel (22) fixed to the front faces (20) of the internal sills of the shell (12) .

9. The motor vehicle (2) according to Claim 8,
**characterized in that** the lower panel (22) is fixed in front of each front face (20), the connected components (28) being fixed on a rear face of said front faces, preferably by electric resistance welding.

10. The motor vehicle (2) according to one of Claims 7 to 9, **characterized in that** it includes, in addition, two external sills of a shell forming a hollow body of U-shaped cross-section with junction rebates in contact with the junction rebates (24; 24') of the internal sills (12), respectively.
